## Europäisches Patentamt
## European Patent Office
## Office européen des brevets

(19)

(11) Numéro de publication : **0 332 496 B1**

(12) ## FASCICULE DE BREVET EUROPEEN

(45) Date de publication du fascicule du brevet :
**08.01.92 Bulletin 92/02**

(51) Int. Cl.$^5$ : **F16B 13/06**

(21) Numéro de dépôt : **89400537.0**

(22) Date de dépôt : **27.02.89**

(54) **Cheville à expansion par cône.**

(30) Priorité : **02.03.88 FR 8802599**

(43) Date de publication de la demande :
**13.09.89 Bulletin 89/37**

(45) Mention de la délivrance du brevet :
**08.01.92 Bulletin 92/02**

(84) Etats contractants désignés :
**BE DE ES FR GB IT SE**

(56) Documents cités :
**FR-A- 2 291 400**
**FR-A- 2 294 354**
**FR-A- 2 574 135**
**GB-A- 569 774**
**US-A- 1 474 980**
**US-A- 3 421 404**

(73) Titulaire : **SOCIETE DE PROSPECTION ET D'INVENTIONS TECHNIQUES SPIT**
**Route de Lyon**
**F-26501 Bourg-Les-Valence Cédex (FR)**

(72) Inventeur : **Barthomeuf, Jean-Paul**
**Alixan - Le Village**
**F-26300 Bourg de Peage (FR)**
Inventeur : **Revol, Gérard**
**Chateaudouble**
**F-26120 Chabeuil (FR)**

(74) Mandataire : **Bloch, Gérard et al**
**2, square de l'Avenue du Bois**
**F-75116 Paris (FR)**

## Description

La présente invention concerne une cheville à expansion par cône, comprenant une tige, à une extrémité de celle-ci, un cône agencé pour être entraîné en translation par la tige et assurer l'expansion d'une douille expansible disposée autour de la tige, une entretoise, disposée autour de la tige, pour immobiliser, pendant son expansion, la douille en translation, et des moyens agencés pour, après l'expansion de la douille, permettre le déplacement relatif de la tige et de la douille.

Une telle cheville est notamment destinée à fixer une pièce lourde à un support en matériau dur, après ancrage de la cheville dans un trou préalablement foré dans le matériau, la pièce étant alors disposée entre la tête de la tige et le bord du trou d'ancrage.

Les moyens, permettant, après l'expansion, le déplacement relatif de la tige et de la douille, autorisent, si la douille a quand même été déplacée dans son trou au cours de l'expansion, et donc la tige avec elle, ce qui est fréquent, un ultime déplacement de la tige, y compris par rapport à la douille alors immobilisée, pour plaquer fermement la pièce à fixer contre le bord du trou d'ancrage.

Ces mêmes moyens permettent aussi de pallier des défauts de planéité ou de variations d'épaisseur.

On connaît déjà une telle cheville, notamment par le document FR-A-2574135.

Dans la cheville de ce document, les moyens autorisant le déplacement relatif de la tige et de la douille sont constitués par une collerette cisaillable solidaire de l'entretoise, qui, après cisaillement suite à un effort déterminé, autorise l'entretoise à pénétrer davantage dans une bague intermédiaire solidaire de la douille.

La cheville de ce document présente l'inconvénient d'être d'un coût de fabrication élevé.

Plus particulièrement encore, le document FR-A-2291400 enseigne une cheville à expansion par cône, comprenant une tige, à une extrémité de celle-ci, un cône agencé pour être entraîné en translation par la tige et assurer l'expansion d'une zone d'expansion d'une douille expansible disposée autour de la tige, des moyens pour immobiliser, pendant son expansion, la douille en translation, la douille comportant une zone axiale coercible de diamètre interne égal à celui de la zone d'expansion pour, après l'expansion de la douille, permettre le déplacement relatif de la tige et de la douille.

Du fait de la zone coercible de la douille, il n'y a plus besoin de bague intermédiaire.

La zone coercible de la douille assure une double fonction : par sa compression, elle autorise un ultime déplacement de la tige par rapport à la zone d'expansion de la douille, après expansion et immobilisation de celle-ci ; de même diamètre interne que la zone d'expansion, elle participe, avec celle-ci, au guidage de la tige de diamètre externe sensiblement égal au diamètre interne de ces deux zones de la douille.

Toutefois, cette dernière cheville n'est pas de réalisation simple et économique et l'effet de coin entre le cône d'expansion et la douille n'est pas parfait.

La présente invention vise donc à perfectionner ce dernier type de cheville.

A cet effet, la présente invention concerne une cheville de ce dernier type, caractérisée par le fait que la douille est constituée d'un flanc de tôle matricé et sa zone d'expansion est pourvue de pattes rabattues, ménageant des dents d'expansion, les bords libres des dents d'expansion et les zones de rabattement des pattes de la zone d'expansion formant une surface tronconique de guidage du cône d'expansion.

L'effet de coin entre le cône et la douille s'effectue, pour ce qui concerne la douille, d'abord par la surface fictive formée, d'une part, par les bords libres des dents d'expansion et, d'autre part, par les zones de rabattement des pattes qui, incidemment, outre leur fonction de guidage de la tige, assurent également la quantité d'expansion nécessaire. Les dents d'expansion sont donc, à cet égard, des dents de guidage du cône d'expansion.

Dans la forme de réalisation préférée de la cheville de l'invention, la zone coercible de douille est une portion de soufflet à ondes périphériques, avantageusement des ondes circonférentielles internes.

De préférence toujours, la zone d'extrémité de la douille, opposée à la zone d'expansion, comporte des bossages internes pour augmenter l'épaisseur apparente, ou fonctionnelle, de la paroi de la douille offerte à l'entretoise et améliorer ainsi sa portée sur l'entretoise.

De préférence encore, la douille de la cheville de l'invention comporte des fentes, avantageusement une longue, entre deux pattes rabattues et deux dents adjacentes, pour assurer une bonne flexion lors de l'expansion.

L'invention sera mieux comprise à l'aide de la description suivante de la cheville de l'invention, en référence aux dessins annexés, sur lesquels :

— la figure 1 est une vue d'ensemble de la cheville ;

— la figure 2 est une vue du flanc de tôle à partir duquel la douille de la cheville de la figure 1 a été réalisée ;

— la figure 3 est une vue de la douille de la cheville de la figure 1 ;

— la figure 4 est une vue en coupe de la douille selon la ligne IV-IV de la figure 3, et

— la figure 5 est une vue en coupe de la douille selon la ligne V-V de la figure 3.

La cheville représentée sur les dessins comporte une tige, ou vis, 1, pourvue, à une extrémité, d'une tête 2 et d'une rondelle de serrage 12, solidaire de la tête, et, à l'autre extrémité, d'une portion filetée 5 dont le filetage est destiné à coopérer avec le taraudage d'un cône d'expansion 3. Une douille expansible 4 est disposée autour de la portion filetée de la vis 1.

En appui contre la rondelle 12 et autour de la partie non filetée de la tige 1 est disposée une entretoise 13.

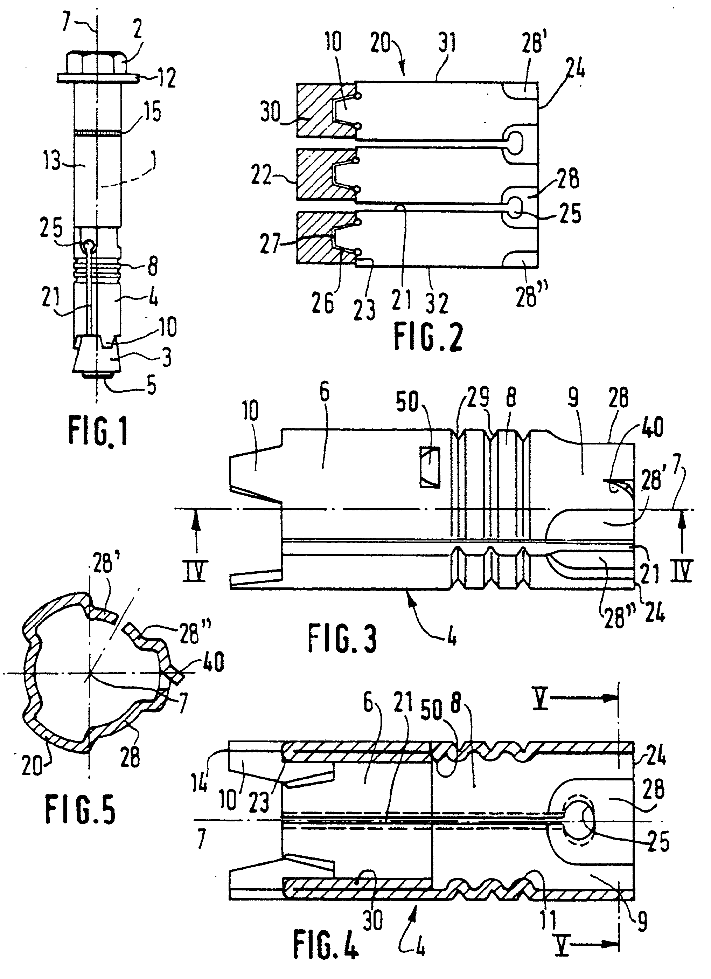

La douille expansible 4 comporte, suivant l'axe 7 de la cheville, une zone d'expansion 6, une zone coercible 8, adjacente à la zone 6, et une zone d'extrémité 9, adjacente à la zone 8, en appui contre l'entretoise 13. La douille 4 a été réalisée à partir d'un flanc de tôle 20 (figure 2). Dans le flanc 20, on a prédécoupé ici deux fentes d'expansion longitudinales 21, s'étendant sur une grande partie de la longueur du flanc, légèrement élargies depuis le bord transversal fendu 22 du flanc jusqu'à une ligne 23 dite de rabattement — on verra plus loin pourquoi —, et terminées, près du bord transversal 24 non fendu du flanc, par un trou 25 destiné à éviter, lors de l'expansion de la douille et donc de la flexion des bandes du flanc comprises entre les fentes, la déchirure de la portion de flanc adjacente à son bord transversal non fendu 24.

Depuis la ligne de rabattement 23, on a prédécoupé de fines fentes trapézoïdales 26, dont les petites bases 27, parallèles aux bords 22, 24 du flanc s'étendent sensiblement plus près de la ligne de rabattement 23 que du bord fendu 22. Les fentes 26 sont également terminées, à leurs deux extrémités, sur la ligne de rabattement 23, par des orifices anti-déchirure.

Dans un outil d'estampage, on a ensuite formé, et d'un même côté du flanc, autour des trous anti-déchirure 25, des bossages 28, aux deux coins libres du bord non fendu 24, des demi-bossages 28', 28'', et dans une zone intermédiaire, entre la ligne de rabattement 23 et les trous 25, mais plus près de ces derniers, des gorges 29, ici trois, parallèles aux bords 22, 24 (figure 3), les bossages et les gorges ayant donc été obtenus par déplacement de matière.

On a ensuite rabattu autour de la ligne 23, ici du côté du flanc vers lequel la matière des bossages et des gorges avait été déplacée, les portions de bande d'extrémité, ou pattes 30, extérieures aux fentes 26, contre la face considérée du flanc pour ainsi, d'un côté de la zone de rabattement, multiplier son épaisseur par deux et, de l'autre côté, dégager des dents d'expansion 10, ici de forme trapézoïdale et au nombre de trois.

On notera que la profondeur des gorges 29 est telle que les nervures correspondantes, vues de l'autre côté du flanc, ont une épaisseur double de celle du flanc d'origine et donc égale à son épaisseur dans la zone des pattes 30 rabattues.

On a enfin, dans une matrice de forme appropriée, déformé le flanc ainsi prédécoupé, estampé et en partie replié sur lui-même pour le rendre cylindrique, d'axe 7, et rapprocher l'une de l'autre les bords longitudinaux 31, 32, mais sans les joindre, ou les confondre, afin de ménager une troisième fente d'expansion 21, visible sur la figure 3, de part et d'autre de laquelle, les demi-bossage 28', 28'' forment un bossage similaire aux deux autres bossages 28.

Les décrochements ménagés par l'élargissement des fentes, près du bord fendu de la douille, évitent qu'après rabattement des pattes, donc de largeur inférieure à celle des bandes sur lesquelles elles sont rabattues, elles ne viennent empêcher une mise en forme cylindrique convenable de la douille.

On notera que la mise en forme cylindrique de la douille, l'estampage des bossages, et la formation des ondes, après rabattement des pattes, pourraient être effectués dans une seule et même matrice.

La zone coercible 8, après mise en forme de la douille, est une portion de soufflet à ondes circonférentielles internes 11 (figure 4), constituées par les nervures correspondant aux gorges 29. Le diamètre interne de la zone coercible 8 est le même que celui de la zone d'expansion 6, avec les pattes rabattues 30.

Dans la zone 9 de la douille, au niveau des bossages internes 28, 28', 28'', et notamment dans son plan d'extrémité 24, la douille présente (figure 5) une double section annulaire, une première section partielle constituée par les portions de bande 20 situées entre les bossages 28, 28', 28'', et selon un premier diamètre extérieur, et une deuxième section partielle annulaire constituée par les portions déplacées vers l'intérieur 28, 28', 28'', selon un deuxième diamètre intérieur, et telle que les manchons enveloppes des deux groupes de portions soient sensiblement radialement adjacents et que l'épaisseur apparente, ou fonctionnelle, de la douille, dans ce plan d'extrémité, soit ainsi le double de l'épaisseur du flanc de départ.

La surface en partie fictive tronconique intérieure formée par l'enveloppe des bords libres 14 des dents 10 et l'enveloppe circulaire des zones 23 de rabattements des pattes 30 sert de guidage au coin d'expansion 3 de surface extérieure complémentaire.

Ayant décrit la cheville dans sa structure, abordons maintenant son fonctionnement.

Après avoir foré, dans un matériau-support, un trou de réception, ou d'ancrage, de la cheville, on l'introduit dans ce trou, au travers d'une pièce à fixer au matériau, jusqu'à un repère annulaire 15 marqué sur l'entretoise 13. L'effort qu'il faut fournir pour introduire la cheville freine légèrement en rotation la douille expansible 4. Quand on visse la vis 1, à l'aide de sa tête 2, le cône 3 s'introduit dans la douille 4 et en provoque l'expansion, c'est-à-dire l'écartement des portions 20 de la douille s'étendant entre les fentes 21.

Si la douille 4 se déplace vers la surface au cours de l'expansion, ce qui est souvent le cas, elle entraîne avec elle la vis 1, grâce à l'entretoise 13 contre laquelle la douille 4 est en butée. Si l'effort que le cône d'expansion 3 exerce sur la zone d'expansion 6 de la douille 4 se répercute sur la zone coercible 8, cette dernière exerce, par l'intermédiaire de la zone 9, un effort sur l'entretoise 13. Pendant cette phase d' expansion, tout au plus les ondes 11 de la zone coercible 8, de par son élasticité relative, se rapprochent très légèrement les unes des autres, sans qu'on puisse pour autant parler d'une compression de cette zone 8.

La douille 4 étant donc légèrement déplacée vers la surface au cours de l'ancrage, la pièce à fixer peut ne pas être plaquée contre le matériau, comme elle le devrait. Alors, et la cheville ayant quand même été correctement ancrée, on va continuer de visser la vis 1. Le cône 3 ayant été immobilisé, la vis 1 va se visser dans le cône en pénétrant dans le trou d'ancrage. Au début de cette phase de blocage, qui peut d'ailleurs viser aussi à pallier des défauts de planéité ou de variations d'épaisseur, la tête 2 de la vis 1 entraîne l'entretoise 13 à exercer un effort contre la douille 4. A un moment, cet effort va provoquer la compression de la zone coercible 8 de la douille et permettre à la vis 1 de plaquer la pièce.

Il pourrait être aussi prévu, dans le plan d'extrémité 24 de la zone 9 de la douille, dans une portion de bande 20, située par exemple entre l'un des bossages 28 et le demi-bossage 28″, un ergot externe 40 assurant une fonction d'anti-rotation entre la douille et le trou d'ancrage (figures 3, 5).

En outre, on pourrait aussi prévoir des ergots internes 50, dans la zone 6 de la douille, pour assurer une fonction de butée pour les pattes rabattues 30 et éviter ainsi leur arrachement par le cône d'expansion 3 en cas de traction importante sur la tige (figures 3, 4).

Au lieu d'une tige pourvue à ses extrémités, d'une tête externe et d'une portion filetée de réception du cône d'expansion, la cheville de l'invention pourrait également comprendre une tige pourvue, inversement, d'une portion filetée de réception d'un écrou externe et d'un cône d'expansion.

## Revendications

1. Cheville à expansion par cône, comprenant une tige (1), à une extrémité (5) de celle-ci, un cône (3) agencé pour être entraîné en translation par la tige et assurer l'expansion d'une zone d'expansion (6) d'une douille expansible (4) disposée autour de la tige, des moyens (13) pour immobiliser, pendant son expansion, la douille (4) en translation, la douille comportant une zone axiale coercible (8) de diamètre interne égal à celui de la zone d'expansion (6) pour, après l'expansion de la douille, permettre le déplacement relatif de la tige et de la douille, caractérisée par le fait que la douille (4) est constituée d'un flanc de tôle (20) matricé et sa zone d' expansion (6) est pourvue de pattes (30) rabattues, ménageant des dents d'expansion (10), les bords libres (14) des dents d'expansion (10) et les zones (23) de rabattement des pattes (30) de la zone d'expansion (6) formant une surface tronconique de guidage du cône d' expansion (3).

2. Cheville selon la revendication 1, dans laquelle la zone coercible (8) est une portion de soufflet à ondes périphériques (11).

3. Cheville selon la revendication 2, dans laquelle les ondes périphériques sont des ondes circonférentielles internes (11).

4. Cheville selon l'une des revendications 1 à 3, dans laquelle la zone d'extrémité (9) de la douille (4), opposée à la zone d'expansion (6), comporte des bossages internes (28, 28′, 28″) pour en augmenter l'épaisseur apparente.

5. Cheville selon la revendication 3, dans laquelle les pattes (30) sont rabattues vers l'intérieur de la douille (4).

## Patentansprüche

1. Konusausdehnungsdübel umfassend einen Schaft (1) mit an dessen einem Ende (5) einem Konus (3), welcher vom Schaft verschoben wird und die Ausdehnung einer Ausdehnungszone (6) einer dehnbaren, um den Schaft herum angeordneten Hülse (4) gewährleistet, bettel (13), um die Verschiebung der Hülse (4) während ihrer Ausdehnung zu blockieren, wobei die Hülse eine komprimierbare Axialzone (8) aufweist, deren Innendurchmesser gleich groß wie derjenige der Ausdehnungszone (6) ist, um nach Ausdehnung der Hülse die relative Verschiebung des Schaftes und der Hülse zu ermöglichen, dadurch gekennzeichnet, daß die Hülse (4) aus einem. geprägten Blechstück (20) besteht und ihre Ausdehnungszone (6) mit umgeklappten, Ausdehnungszähne (10) freisetzenden Pratzen (30) versehen ist, wobei die freien Ränder (14) der Ausdehnungszähne (10) und die Klappzonen (23) der Pratzen (30) der Ausdehnungszone (6) eine kegelstumpfartige Führungsfläche für den Ausdehnungskonus (3) bilden.

2. Dübel gemäß Anspruch 1, bei welchem die komprimierbare Zone (8) ein Balgteil mit Umfangswellen (11) ist.

3. Dübel gemäß Anspruch 2, bei welchem die Umfangswellen Innenumkreiswellen (11) sind.

4. Dübel gemäß einem der Ansprüche 1 bis 3, bei welchem die der Ausdehnungszone (6) gegenüberliegende Endzone (9) der Hülse (4) innen Verdickungen (28, 28′, 28″) zur Erhöhung deren offenbaren Wandstärke aufweist.

5. Dübel gemäß Anspruch 3, bei welchem die Pratzen (30) gegen das Innere der Hülse (4) geklappt sind.

## Claims

1. Cone expansion plug, comprising a shank (1), at one end (5) thereof, a cone (3) adapted for being driven in translation by the shank and causing expansion of an expansion zone (6) of an expandable socket (4) disposed around the shank, means (13) for securing the socket (4) against translation during its expansion, the socket comprising an axial compressible zone (8) whose internal diameter is equal to that of the expansion zone (6) for permitting relative movement of the shank and the socket after expansion of this latter, characterized by the fact that the socket (4) is formed from a stamped metal sheet blank (20) and its expansion zone (6) is provided with bent lugs (30) forming expansion teeth (10), the free edges (14) of the expansion teeth (10) and the bending zones (23) of the lugs (30) of the expansion zone (6) forming a truncated cone shaped surface for guiding the expansion cone (3).

2. Plug according to claim 1, wherein the compressible zone (8) is a bellows portion with peripheral corrugations (11).

3. Plug according to claim 2, wherein the peripheral corrugations are internal circumferential corrugations (11).

4. Plug according to one of claims 1 to 3, wherein the end zone (9) of the socket (4), opposite the expansion zone (6), comprises internal bosses (28, 28', 28") for increasing the apparent thickness thereof.

5. Plug according to claim 3, wherein the lugs (30) are bent inwardly of the socket (4).

FIG.1

FIG.2

FIG.3

FIG.5

FIG.4